Europäisches Patentamt

European Patent Office

Office européen des brevets

(11) Publication number: **0 101 671**
A1

# (12) EUROPEAN PATENT APPLICATION

(21) Application number: 83830133.1

(51) Int. Cl.³: **B 23 D 19/06**

(22) Date of filing: 28.06.83

(30) Priority: 29.06.82 IT 2213782
29.06.82 IT 2228082 U

(43) Date of publication of application: 29.02.84
Bulletin 84/9

(84) Designated Contracting States: **AT BE CH DE FR GB LI
LU NL SE**

(71) Applicant: **F.I.C.I. FINANZIARIA INDUSTRIALE
COMMERCIALE IMMOBILIARE S.p.A., Corso
Matteotti, 8, Milano (IT)**

(72) Inventor: **Rovelli, Pompeo, Via Diaz, Barzano' (Como)
(IT)**

(74) Representative: **Zorzoli, Franco, c/o BUGNION S.p.A.
Via Carlo Farini 81, I-20159 Milan (IT)**

(54) Process to produce sheet metal strips to be die formed and apparatus to obtain the same.

(57) Sheet metal band is divided into strips by means of a plurality of cuts that develop according to substantially sinusoidal lines disposed side by side in phase opposition with respect to each other, in order to define strips formed by a plurality of substantially circular housings for die forming connected to each other by means of narrow connecting pieces.

Process to produce sheet metal strips to be die formed and apparatus to obtain the same

The present invention relates to a process to produce sheet metal strips to be die formed and to the apparatus to obtain the same.

It is known that there are on the market many articles and envelopes obtained by die forming a sheet metal strip more or less deeply. In many cases these articles have a substantially circular outline such as, for example, bottoms or covers of a sheet metal envelope. The substantially circular outline of these elements does not give rise to any technological problem as to dieing the same but a remarkable waste of sheet metal occurs during this operation. In fact the die forming is carried out on sheet metal strips having a linear development, the width of which is substantially similar to that of the elements to be die formed. The strips themselves are obtained by simply cutting a sheet metal band in a linear manner.

Obviously by this process there is a high quantity of scraps or unused material as compared with the utilized one, even if the impressions are formed very close to one another.

The technical object of the present invention is to conceive a process and an apparatus allowing to overcome the above mentioned drawback.

This object is achieved by a process suitable to produce

0101671

sheet metal strips to be die formed comprising at least the steps of: feeding a sheet metal band from a feeding roll, dividing said band into a plurality of side by side strips designed to be individually die formed and winding said strips upon themselves, characterized in that the dividing step is carried out by making a plurality of cuts on said band that develop according to substantially meandering lines which periodically approach or diverge with respect to one another and in that said winding step is carried out by directing the same strips towards a plurality of reels and winding each strip on a reel which is clear of the immediately adjacent strip.

According to another feature of the invention it is provided an apparatus suitable to produce sheet metal strips to be die formed which comprises a cutting device to cut sheet metal bands or the like including a plurality of cutting wheels which are centrally supported by bars and disposed so that they are substantially superimposed by pairs in order to define shears for a sheet metal band which is introduced between the same wheels, characterized in that each of said cutting wheels has a cutting edge which develops along a cylindrical surface according to a closed and symmetrically undulating line in each of said shears the above mentioned superimposed wheels exhibiting cutting edges which are complementary shaped with respect to each other.

Further features and advantages will appear more evident from the description of a preferred embodiment given hereinafter with reference to the accompanying drawings, in which:

- Fig. 1 is a plan view of one step of the operating process according to the invention as well as of the apparatus for carrying out said process;

- Fig. 2 is a diagrammatic front view of a portion of the apparatus shown in Fig. 1;

- Figs. 3 and 4 are diagrammatic side views of the apparatus seen in Fig. 1, showing two different paths for the sheet metal band; and

- Fig. 5 shows shear blades being part of the apparatus seen in the preceding figures, in a perspective view and taken separately.

Referring to the drawings, the process according to the invention comprises a plurality of steps which, starting from a wound up sheet metal band, lead to the obtention of shaped sheet metal strips that are individually wound and ready for die forming.

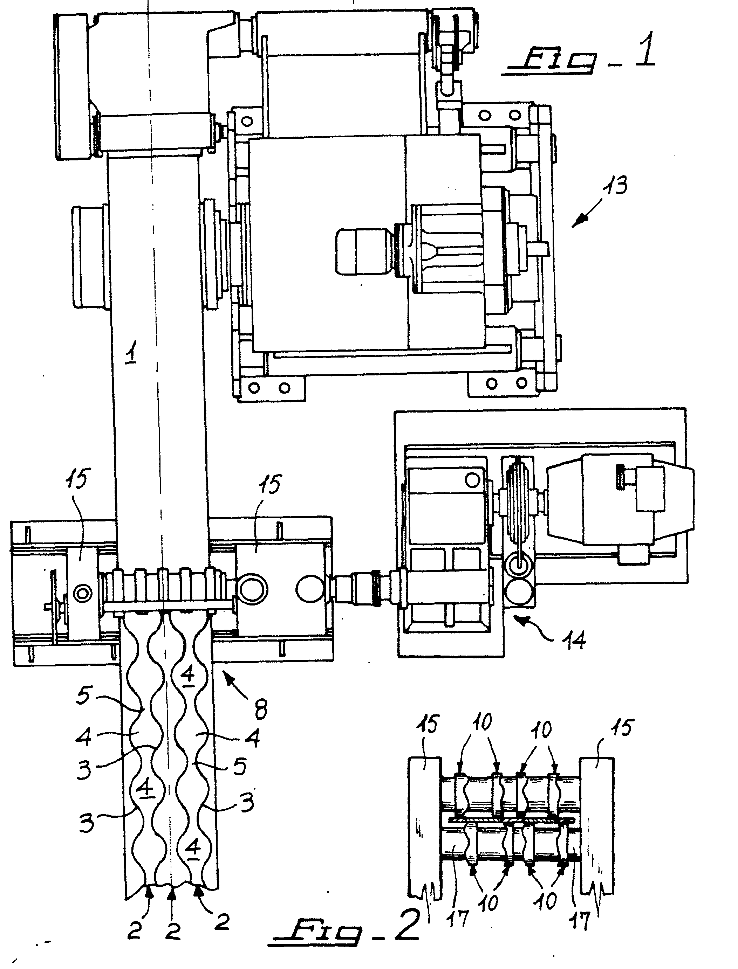

In sequence we have the following steps. Firstly a sheet metal band 1 is unwound from a roll and fed at a substantially constant speed. Then the band 1 is divided into a plurality of strips 2 disposed side by side and adapted to be individually die formed. The dividing step is executed, as shown in Fig. 1, by means of a plurality of cuts 3 which develop according to meandering lines which periodically approach and diverge with respect to one another, without compromising the continuity of strips 2.

Particularly, provision is made for the cutting lines or cuts 3 to have a sinusoidal outline and to be

arranged side by side in phase opposition with respect to each other. More particularly, it is provided that the width of said sinuscidal lines may in each strip 2 define a plurality of substantially circular housings for die forming 4 connected to each other by means of tapered connecting pieces.

According to the invention it is also provided that in a further step of the process each strip 2 is wound up on itself.

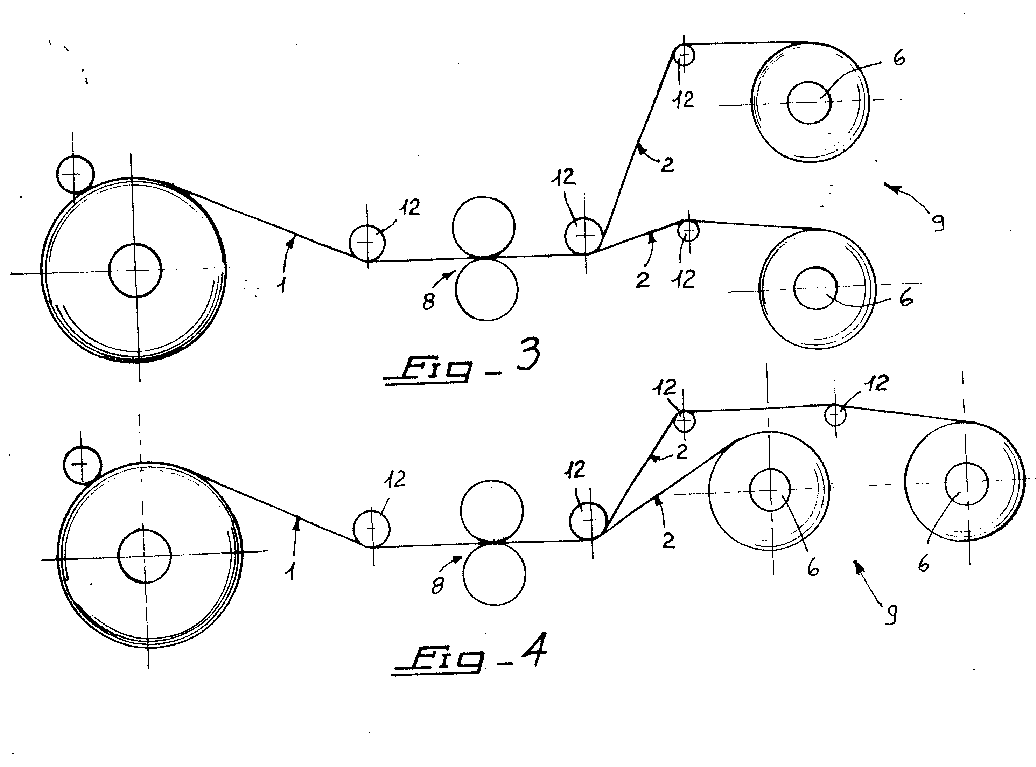

In opposition to the known art, Fig. 2 shows that the **strips** 2 are wound up on more than one winding reel and that the designed reels are disposed parallel to and spaced apart from each other, but always contained in a vertical belt defined by the band 1 itself. Particularly, two superimposed or side by side disposed winding reels 6 are provided and strips 2 are alternately sent to both reels. As a result, each winding reel 6 winds up at least one strip 2 but not the strips which are immediately adjacent that one.

The process according to the present invention is particularly advantageous. In fact, it is possible to produce sheet metal strips to be die formed that, without losing their physical continuity, are substantially defined by a plurality of aligned housings for die forming having a circular shape and therefore being suitable to obtain elements of any outline in general and of a circular outline in particular. In this manner it is possible to ensure a continuous supply to the dieing machines as the material is fed from a strip and not from a plate or a cut down size as it happens
at present.

The final step of the process according to the invention,
in which the obtained strips are alternately sent to
two winding reels superimposed or disposed side by side
is particularly advantageous owing to the following two
reasons.

Firstly, by this technical solution the strips 2 do not
interfere with one another in correspondence of their
expanded portions. Secondly, the winding reels 6 can be
arranged very near to the area where the band is divided
into strips. In fact it is no more necessary to open
wide apart, in a coplanar direction, the sheet metal
strips formed, in order to allow the introduction of
suitable winding spacers therebetween. In fact it is
known that this coplanar spacing, owing to a reduced
elasticity of the sheet metal in its plane of development, needed rather high distances for obtaining small
displacements. It is now possible to overcome this
drawback as the sheet metal is perfectly flexible in a
perpendicular direction to its lying plane.

In the above mentioned drawings it is shown an apparatus
for carrying out the process of the invention.
Summarily, this apparatus is provided with cutting means
8 and winding means 9 accomplishing the final step of
winding and comprising at least two winding reels 6
superimposed or disposed side by side.

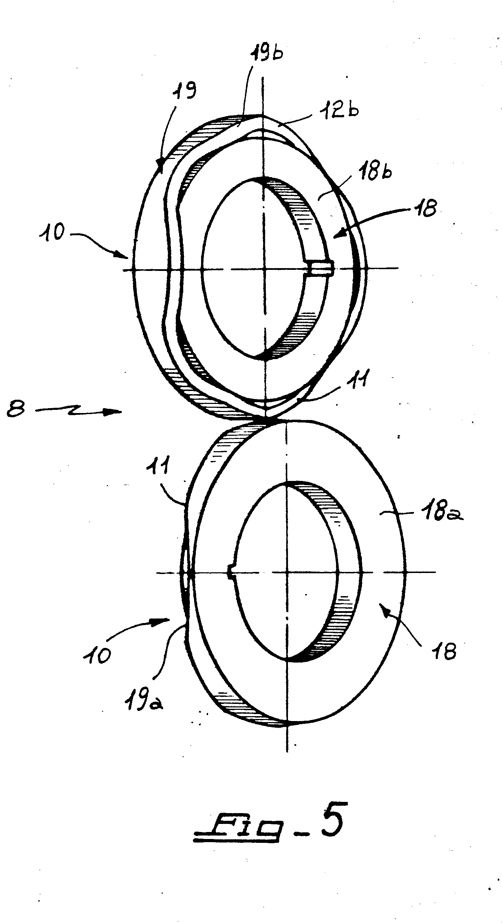

As shown in Fig. 5, said cutting means 8 comprises cutting wheels 10 disposed in opposition to each other, which clamp the sheet metal 1 between the cutting edges 11 having a sinusoidal development and being substantially disposed on said cutting wheels 10, like front flanges. Furthermore, Figs. 3 and 4 show deflecting rollers 12 disposed along the path of band 1 and strips 2 and Fig. 1 diagrammatically shows control members 13 for controlling the movement of bands 1 as well as a power unit 14 for the cutting means 8. In a known manner, the control members 13 first cause the starting of band 1 and secondly, when the drawing action of the winding reels 16 begins, they have a braking effect on the band 1 so that it is always taut.

More particularly, referring to Figs. 2 and 5, the cutting device 8 is supported by a frame defining a pair of shoulders or columns 15 between which the cutting wheels 10 are inserted; these wheels are supported by bars engaged at their ends with said shoulders or columns 15. It is possible to distinguish a first upper bar 16 and a second lower bar 17, parallel to each other and vertically superimposed, which are connected to the power unit 14.

A plurality of cutting wheels 10 is fitted on each bar 16 and 17 in order to form pairs of substantially superimposed wheels. Each pair of cutting wheels 10 forms a shear for cutting the sheet metal band 1 (Fig. 5). In each wheel these cutting edges 11 develop along a cylindrical surface coaxial to the axis of rotation of the wheel itself. On this cylindrical surface the cutting edges 11 describe a symmetrically undulating closed line. Obviously the cutting edges 11 of each shear or pair of cutting wheels 10 are similar and disposed so that they are complementary to each other in order to carry out the cut on the sheet metal band 1. In the case shown it is particularly provided that said symmetrically undulating closed line described by the cutting edge 11 of each wheel should be a sinusoidal line.

Furthermore, it is advantageously provided that the cutting wheels 10 are disposed on their respective bars 16 and 17 so that each cutting edge 11 is placed side by side of cutting edges having the same sinusoidal development but being in phase opposition with respect to each other. Practically, numbering the cutting edges consecutively, on the same bar the cutting edges 11 of the cutting wheels 10 bearing even numbers are in phase opposition with the edges of the cutting wheels bearing odd numbers.

Fig. 5 is a detailed description of the structure of a single shear and of each cutting wheel 10. It appears from said figure that each cutting edge 11 describes a sinusoidal closed line developed along a cylindrical surface, for a certain number of complete periodic oscillations. In addition, each cutting wheel 10 consists of an annular inner body 18 and of a shaped outer belt 19. The annular body 18 is directly fitted on a bar 16, 17 and has two main faces 18a and 18b disposed at right angles to the axis of rotation of the cutting wheel 10. In turn, the shaped belt 19 exhibits a first edge 19a which is the extension of the main face 18a of the annular body 18 and a second edge 19b which substantially coincide with the cutting edge 11. The second edge 19b of the shaped belt 19 develops with its projections and recesses in a symmetrical manner with respect to the development plane of the main face of said annular body 18.

It should be pointed out that the obtention of these advantageous cutting edges has been achieved by simple means adapted to be applied to cutting devices already on sale, in which the replacing of the cutting wheels is required.

Several modifications and variations can be made to this invention without departing from the spirit and scope of the same. In addition, all details can be replaced by technically similar elements. Practically, the materials used as well as the shapes and sizes can be whatever according to the requirements.

# C L A I M S

1. A process suitable to produce sheet metal strips to be die formed comprising at least the steps of: feeding a sheet metal band from a feeding roll, dividing said band into a plurality of side by side strips designed to be individually die formed and winding said strips upon themselves, characterized in that the dividing step is carried out by making a plurality of cuts on said band that develop according to substantially meandering lines which periodically approach or diverge with respect to one another and in that said winding step is carried out by directing the same strips towards a plurality of reels and winding each strip on a reel which is clear of the immediately adjacent strip.

2. A process according to claim 1, characterized in that said dividing step is carried out executing a plurality of cuts on said band, which develop according to substantially sinusoidal lines arranged side by side in phase opposition with respect to each other.

3. A process according to claim 1, characterized in that said winding step is carried out by arranging two winding reels and winding said strips alternately on both said reels.

4. An apparatus suitable to produce sheet metal strips to be die formed which comprises a cutting device to cut sheet metal bands or the like including a plurality of cutting wheels which are centrally supported by bars and disposed so that they are substantially superimposed

0101671

by pairs in order to define shears for a sheet metal band which is introduced between the same wheels, characterized in that each of said cutting wheels has a cutting edge which develops along a  cylindrical surface according to a closed and symmetrically undulating line in each of said shears the above mentioned superimposed wheels exhibiting cutting edges which are complementary shaped with respect to each other.

5. An apparatus according to claim 4, characterized in that said symmetrically undulating closed line is a substantially sinusoidal line.

6. An apparatus according to claims 4 and 5, characterized in that said cutting wheels disposed on the same bar are provided with cutting edges which develop according to substantially sinusoidal lines that are similar to each other and in that each of said lines is in phase opposition with respect to the sinusoidal lines of adjacent cutting wheels.

7. An apparatus according to claim 4, characterized in that each of said cutting wheels has an annular body fitted on one of said bars and provided with main faces at right angles to the axis of the same bar and a shaped belt disposed upon said annular body and exhibiting a first shaped edge that substantially coincide with said cutting edge and a second edge which is the extension of one of said main faces of the annular body.

8.  An apparatus according to claim 7, characterized in that the first edge of said shaped belt defines projections and recesses that are symmetrical to the development plane of the adjacent main face of said annular body.

9. An apparatus according to claim 4, characterized in that it comprises winding means defined by a plurality of substantially parallel, spaced winding reels, disposed in a vertical belt defined by the same band being worked.

10. A sheet metal strip to be die formed, characterized in that it comprises a plurality of housings for die forming having a substantially circular shape and linearly connected to each other by means of substantially narrow connecting pieces.

BAD ORIGINAL

0101671

_Fig_1_

13

15 15

1

15 15

10 10

14

5

4

3

4

8

4

3

4

3

4

17 10 10 17

2 2 2

_Fig_2_

Fig - 3

Fig - 4

_Fig _ 5

0101671

European Patent
Office

**EUROPEAN SEARCH REPORT**

Application number

EP 83 83 0133

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | US-A-3 517 532 (ZILKOWSKY) <br><br> * Whole document * <br><br> --- | 1,2,4-8,10 | B 23 D 19/06 |
| X | US-A-4 293 101 (DUNAEVSKY) <br> * Whole document * <br><br> --- | 3,9 | |
| X | US-A-3 853 280 (PENNIST) <br> * Whole document * <br><br> --- | 3,9 | |
| A | US-A-3 388 582 (WESSTROM) <br><br> --- | | |
| A | US-A-1 433 138 (KRUSE) <br><br> ----- | | TECHNICAL FIELDS SEARCHED (Int. Cl. ³) <br><br> B 23 D <br> B 65 H |

The present search report has been drawn up for all claims

| Place of search <br> THE HAGUE | Date of completion of the search <br> 14-10-1983 | Examiner <br> BERGHMANS H.F. |
|---|---|---|

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO Form 1503. 03.82